# EUROPEAN PATENT APPLICATION

(11) **EP 4 667 943 A1**
(43) Date of publication of application: **24.12.2025**
(21) Application number: 23922925.5
(22) Date of filing: 12.12.2023
(51) Int. Cl.: G01N 35/02

(54) **AUTOMATIC ANALYSIS DEVICE, UNLIDDING MECHANISM, AND UNLIDDING METHOD**

(30) Priority: 15.02.2023 JP 2023021309
(71) Applicant: HITACHI HIGH-TECH CORPORATION, Tokyo 105-6409 (JP)
(72) Inventor: MASAME Yuzen, Tokyo 105-6409 (JP); MISHIMA Hiroyuki, Tokyo 105-6409 (JP); NONAKA Kohei, Tokyo 105-6409 (JP)
(74) Representative: MERH-IP Matias Erny Reichl Hoffmann Patentanwälte PartG mbB
(86) International application number: PCT/JP2023/044531
(87) International publication number: WO 2024/171592

(57) **Abstract**

To provide an automatic analyzer, an uncovering mechanism, and an uncovering method capable of forming a cut having a desired shape on a lid without the lid escaping from a center of the lid to the outside. The automatic analyzer includes: a reagent disk 3 configured to accommodate a reagent bottle 4 accommodating a reagent; and a lid opening mechanism 30 including a piercing needle 15 configured to break a lid 4a of the reagent bottle 4 to be conveyed to the reagent disk 3 or the reagent bottle 4 conveyed to the reagent disk 3, and the piercing needle 15 includes a first step blade portion 16 configured to break the lid 4a from a center portion of the lid 4a toward a peripheral portion of the lid 4a, and a second step blade portion 17 configured to break the lid 4a from the peripheral portion of the lid 4a to the center portion of the lid 4a.

## Description

### Technical Field

The present invention relates to a dispensing device and a dispensing method for dispensing a liquid specimen such as a reagent, blood, or urine, and an automatic analyzer using the same, and more particularly to an automatic analyzer having a function of making a cut in a lid of a reagent bottle, an uncovering mechanism, and an uncovering method.

### Background Art

PTL 1 describes the following.

"An insertion load applied to a reagent probe increases at the time of first insertion of the reagent probe immediately after a cut is opened in a reagent bottle lid with a needle. When the load at the time of the first insertion of the reagent probe increases, a spring contracts due to the load at the time of insertion, and may be erroneously detected as an obstacle. The needle that opens the cut in the reagent bottle lid is formed into a shape in which an expanding portion that pushes and expands the cut and a piercing portion that opens the cut are integrated. Accordingly, by only one operation of lowering the needle, the cut can be opened by the needle and the cut can be expanded by the expanding portion. Further, a diameter of the expanding portion is made smaller than a diameter of a circumscribed circle of a cross section of the piercing portion, and is made equal to or larger than a diameter of the reagent probe, so that the cut can be uniformly opened."

### Citation List

### Patent Literature

PTL 1: WO2017/018214

### Summary of Invention

### Technical Problem

For example, in order to prevent deterioration of a reagent, an automatic analyzer such as a biochemical automatic analyzer or an immune automatic analyzer has a function of opening a small hole in a lid of a reagent bottle using the piercing needle as disclosed in PTL 1 and dispensing the reagent from the hole using the reagent probe.

From the viewpoint of labor saving, for making the hole in the lid of the reagent bottle, an apparatus automatically opens small holes in lids of reagent bottles when an operator places the one or more reagent bottles on a reagent disk inside the apparatus.

PTL 1 discloses that the cut is made in the lid of the reagent bottle by the piercing needle having a plurality of blades. When the reagent probe is inserted into the cut of the lid formed by such a piercing needle, the reagent probe is inserted while pushing and opening the cut, and thus friction occurs between the reagent probe and the reagent bottle lid. When heat or a shearing force due to the friction is applied to the reagent, a structure or the like of components contained in the reagent may change.

In particular, it is expected that the number of measurable times per reagent bottle may increase with development of a reagent micro-dispensing technique in the future, and the reagent will be affected by the friction over a longer period of time.

In order to further extend a life of the reagent, it is necessary to reduce the friction between the reagent bottle lid and the reagent probe. On the other hand, when the cut is too large for the friction reduction, there is a problem that an inflow of an outside air increases and the reagent is likely to deteriorate. Therefore, in order to reduce the friction with the reagent probe while keeping a size of the cut relatively small, it is desirable to increase the number of cuts.

In order to increase the number of cuts, it is conceivable to increase the number of blades of the piercing needle.

However, as a result of intensive studies by the present inventors, it has been found that, when a cut is made in a lid with a piercing needle in which four blades are provided such that the blade becomes a cross when viewed from an axial direction of the piercing needle and the cutting edges converge at a tip end of the piercing needle, the cut is made in any one straight line of the cross, and even when the blade orthogonal thereto hits the lid, the lid escapes from a center of the lid to the outside due to the cut, and thus it is difficult to form four cuts.

An object of the invention is to provide an automatic analyzer, an uncovering mechanism, and an uncovering method capable of forming a cut having a desired shape in a lid without the lid escaping from a center of the lid to the outside.

### Solution to Problem

The invention includes a plurality of units for solving the above problems, and an example thereof is an automatic analyzer for dispensing a specimen and a reagent into each of a plurality of reaction containers to cause a reaction, and measuring a liquid obtained by the reaction, the automatic analyzer including: a reagent disk configured to accommodate a reagent bottle accommodating the reagent; and an uncovering mechanism including a piercing needle configured to break the reagent bottle conveyed to the reagent disk or a lid of the reagent bottle conveyed to the reagent disk. The piercing needle includes a first step blade portion configured to break the lid from a center portion of the lid toward a peripheral portion of the lid, and a second step blade portion configured to break the lid from the peripheral portion of the lid to the center portion of the lid.

### Advantageous Effects of Invention

According to the invention, a cut having a desired shape can be formed in a lid without the lid escaping from a center of the lid to the outside. Problems, configurations, and effects other than those described above will be clarified by description of the following embodiment.

### Brief Description of Drawings

[FIG. 1] FIG. 1 is a diagram showing an overall configuration of an automatic analyzer according to an embodiment.
[FIG. 2] FIG. 2 is a diagram showing an outline of a lid opening mechanism in the automatic analyzer according to the embodiment.
[FIG. 3] FIG. 3 is a perspective view of a piercing needle of the lid opening mechanism in the automatic analyzer according to the embodiment.
[FIG. 4] FIG. 4 is a right side view of the piercing needle of the lid opening mechanism in the automatic analyzer according to the embodiment.
[FIG. 5] FIG. 5 is a top view of the piercing needle of the lid opening mechanism in the automatic analyzer according to the embodiment.
[FIG. 6] FIG. 6 is a front view of the piercing needle of the lid opening mechanism in the automatic analyzer according to the embodiment.
[FIG. 7] FIG. 7 is a front view showing a state where a lid is cut by the lid opening mechanism in the automatic analyzer according to the embodiment.
[FIG. 8] FIG. 8 is a side view showing the state where the lid is cut by the lid opening mechanism in the automatic analyzer according to the embodiment.
[FIG. 9] FIG. 9 is an image showing a state where the lid is cut by the piercing needle of the lid opening mechanism in the automatic analyzer according to the embodiment.
[FIG. 10] FIG. 10 is a flowchart showing a flow of making a cut in the lid by the lid opening mechanism in the automatic analyzer according to the embodiment.
[FIG. 11] FIG. 11 is a diagram showing a state of step 3 in FIG. 10.
[FIG. 12] FIG. 12 is a diagram showing a state of step 4 in FIG. 10.
[FIG. 13] FIG. 13 is a diagram showing a state of step 11 in FIG. 10.
[FIG. 14] FIG. 14 is a perspective view of another form of the piercing needle of the lid opening mechanism in the automatic analyzer according to the embodiment.
[FIG. 15] FIG. 15 is a partially enlarged view of FIG. 14.
[FIG. 16] FIG. 16 is a front view of the other form of the piercing needle of the lid opening mechanism in the automatic analyzer according to the embodiment.
[FIG. 17] FIG. 17 is a side view of the other form of the piercing needle of the lid opening mechanism in the automatic analyzer according to the embodiment.

### Description of Embodiments

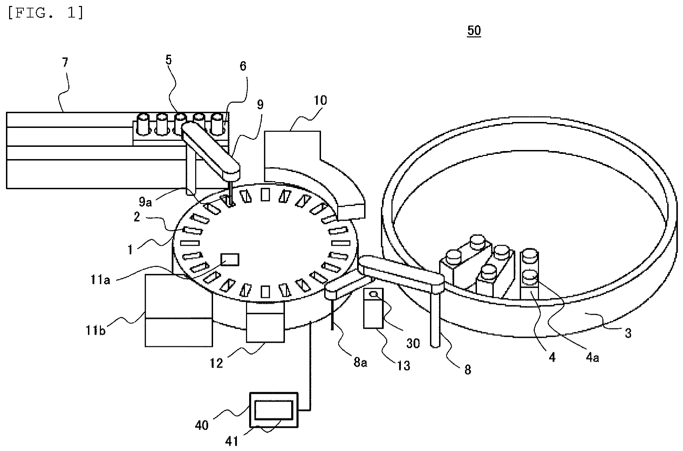

Embodiments of an automatic analyzer, an uncovering mechanism, and an uncovering method of the invention will be described with reference to FIGS. 1 to 17. In the drawings used in the present description, the same or corresponding components are denoted by the same or similar reference signs, and repeated description of these components may be omitted.

First, an overall configuration of an automatic analyzer including an uncovering mechanism will be described with reference to FIG. 1. FIG. 1 is a diagram showing an overall configuration of the automatic analyzer according to the embodiment.

An automatic analyzer 50 shown in FIG. 1 is an apparatus for dispensing a specimen such as blood or urine and a reagent into each of a plurality of reaction containers 2 and causing the specimen and the reagent to react with each other, and measuring a liquid obtained by the reaction, and includes a reaction disk 1, a reagent disk 3, a specimen conveyance mechanism 7, a reagent dispensing mechanism 8, a sample dispensing mechanism 9, a cleaning mechanism 10, a light source 11a, a spectrophotometer 11b, a stirring mechanism 12, a lid opening mechanism 30, a controller 40, and the like.

In the reaction disk 1, the plurality of reaction containers 2 each for mixing the specimen and the reagent to cause a reaction are arranged on a circumference. The specimen conveyance mechanism 7 that moves a rack 6 on which specimen containers 5 each containing the specimen such as blood are placed is provided near the reaction disk 1.

The rotatable and vertically movable sample dispensing mechanism 9 is provided between the reaction disk 1 and the specimen conveyance mechanism 7, and includes a sample probe 9a. A specimen syringe (omitted for convenience of illustration) is connected to the sample probe 9a. The sample probe 9a moves while drawing an arc around a rotation axis thereof, and dispenses the specimen from the specimen container 5 conveyed to a specimen dispensing position by the specimen conveyance mechanism 7 into the reaction container 2.

A cleaning tank for cleaning the sample probe 9a with cleaning water and a cleaning container (not shown) for cleaning the sample probe 9a with special cleaning water are disposed in an operation range of the sample dispensing mechanism 9.

The reagent disk 3 has a structure on which a plurality of reagent bottles 4 can be placed on a circumference thereof. The reagent disk 3 is kept cold, and is covered with a cover provided with an aspiration port (not shown). The reagent bottle 4 is a bottle accommodating a reagent used for analyzing a specimen.

The rotatable and vertically movable reagent dispensing mechanism 8 is provided between the reaction disk 1 and the reagent disk 3, and includes a reagent probe 8a. A reagent syringe (not shown) is connected to the reagent probe 8a. The reagent probe 8a moves while drawing an arc around a rotation axis thereof, accesses an inside of the reagent disk 3 from the aspiration port, and dispenses the reagent from the reagent bottle 4 to the reaction container 2.

A cleaning tank (not shown) for cleaning the reagent probe 8a with cleaning water is disposed in an operation range of the reagent dispensing mechanism 8.

Around the reaction disk 1, the stirring mechanism 12 that stirs a mixed liquid (reaction liquid) of the specimen and the reagent dispensed into the reaction container 2, the spectrophotometer 11b that measures an absorbance of the reaction liquid by measuring transmitted light from the light source 11a passing through the reaction liquid in the reaction container 2, the cleaning mechanism 10 that cleans the used reaction container 2, and the like are disposed.

The stirring mechanism 12 is configured to rotate in a horizontal direction and move vertically, and is inserted into the reaction container 2 to stir the mixed liquid (reaction liquid) of the specimen and the reagent. A cleaning tank (not shown) for cleaning the stirring mechanism 12 with cleaning water is disposed in an operation range of the stirring mechanism 12. A cleaning pump is connected to the cleaning mechanism 10.

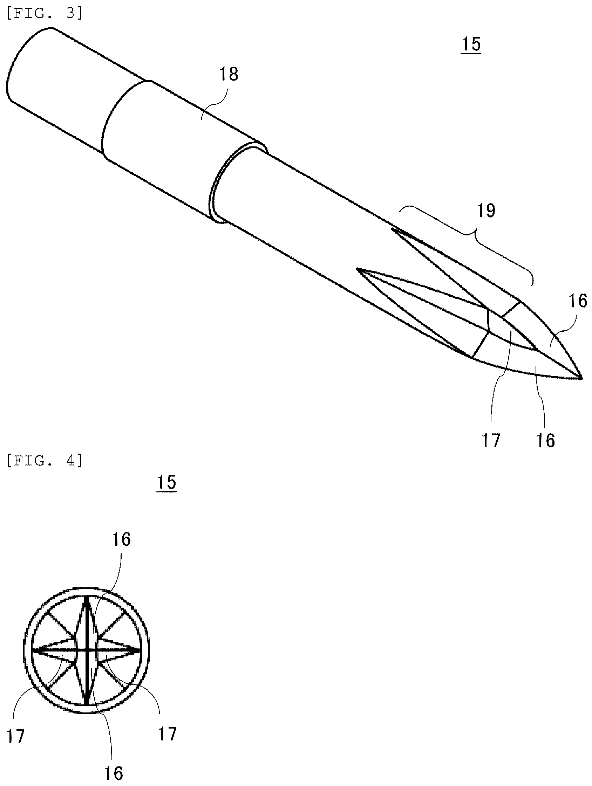

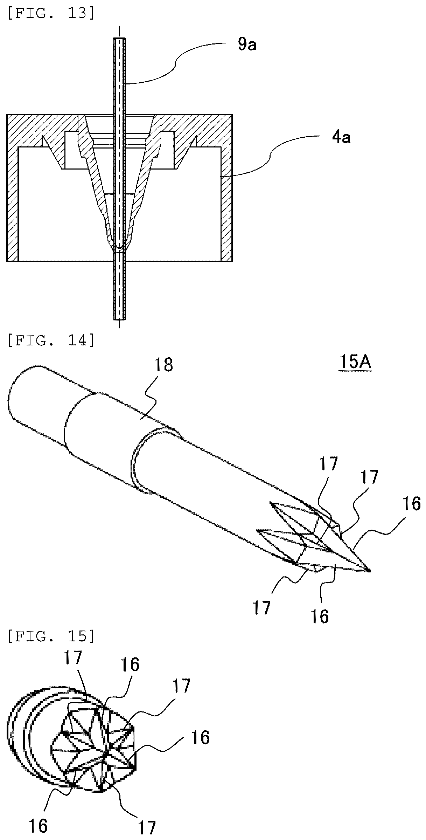

A storage position 13 for the lid opening mechanism 30 is disposed around the reagent disk 3, and the lid opening mechanism 30 having a piercing needle 15 or 15A (see FIGS. 3, 14, and the like, respectively) is stored therein. A lid 4a of the reagent bottle 4 placed on the reagent disk 3 is opened by the lid opening mechanism 30.

The lid 4a is attached to a reagent aspiration position of the reagent bottle 4 in order to seal an inside of the reagent bottle 4, and it is common to remove the lid 4a when setting the reagent bottle 4 inside the apparatus. On the other hand, there is also a method of making a cut in the lid 4a and inserting the reagent probe 8a into the cut to aspirate the reagent. Since an opening portion of the lid 4a is cut slightly, contact of the reagent with an outside air is minimized, and deterioration of the reagent is improved as compared with the related art. The present embodiment also includes the lid opening mechanism 30 for making the cut.

The controller 40 is connected to devices in the above-described automatic analyzer 50, and controls the operation of each device and mechanism in the automatic analyzer 50. The controller 40 is a computer including a CPU, a memory, and the like, and performs arithmetic processing for obtaining a concentration of a predetermined component in the specimen from a detection result of the spectrophotometer 11b.

The control on the operation of each device is executed by the controller 40 based on various programs recorded in a storage device. The storage device stores, in addition to the various programs used to measure the specimen, various parameters received via an input device, information of a measurement target specimen (specimen type information and the like), a measurement result, and the like.

Operation control processing executed by the controller 40 may be integrated into one program, may be divided into a plurality of programs, or may be a combination thereof. A part or all of the programs may be implemented by dedicated hardware or may be modularized.

A display unit 41 is a display device such as a liquid crystal display that displays, for an operator, various types of information in the automatic analyzer 50 such as input screens for various parameters and settings, analysis test data of an initial test or a re-test, measurement results, and reagent information. A display device of a touch panel type that also serves as an input unit can be used.

A configuration of the automatic analyzer 50 is as described above.

The configuration of the automatic analyzer 50 is not limited to a case of a biochemical analyzer that executes analysis of biochemical analysis items as shown in FIG. 1, and may be an analyzer that executes analysis of other analysis items, such as an immune analyzer that executes analysis of immune analysis items. Further, the biochemical analyzer is also not limited to the form shown in FIG. 1, and an analysis device for measuring other analysis items, for example, an electrolyte can be separately mounted.

Further, the automatic analyzer 50 is not limited to the form of a single analysis module configuration as shown in FIG. 1, and may be configured such that two or more analysis modules capable of measuring various same or different analysis items or preprocessing modules for performing preprocessing are connected by a conveyance device.

Specimen test analysis processing executed by the above-described automatic analyzer 50 is generally executed in the following order.

First, the specimen in the specimen container 5 placed on the rack 6 conveyed near the reaction disk 1 by the specimen conveyance mechanism 7 is dispensed into the reaction container 2 on the reaction disk 1 by the sample probe 9a of the sample dispensing mechanism 9. Next, the reagent to be used for analysis is dispensed by the reagent dispensing mechanism 8 from the reagent bottle 4 on the reagent disk 3 into the reaction container 2 into which the specimen is previously dispensed. Subsequently, the stirring mechanism 12 stirs the mixed liquid of the specimen and the reagent in the reaction container 2.

Thereafter, the light generated from the light source 11a is transmitted through the reaction container 2 containing the mixed liquid after stirring, and an intensity of the transmitted light is measured by the spectrophotometer 11b. The intensity measured by the spectrophotometer 11b is transmitted to the controller 40 via an A/D converter and an interface. Then, a concentration of a predetermined component in a liquid specimen such as blood or urine is obtained by the arithmetic processing performed by the controller 40, and a result is displayed on the display unit 41 or the like and stored in a storage unit (not shown).

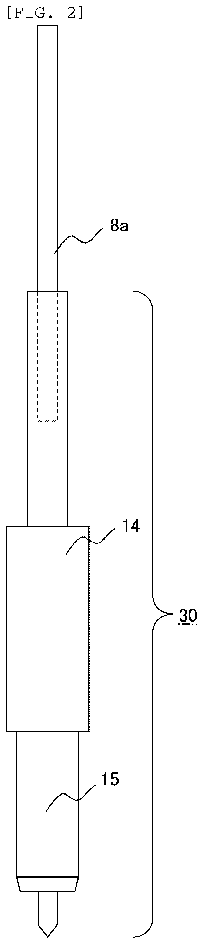

Next, a characteristic configuration of the lid opening mechanism 30 of the invention will be described with reference to FIG. 2. FIG. 2 is a diagram showing an outline of the lid opening mechanism.

The lid opening mechanism 30 shown in FIG. 2 includes a reagent probe mounting portion 14 and the piercing needle 15 as main parts.

When the lid 4a is opened, first, the reagent probe mounting portion 14 of the lid opening mechanism 30 in the storage position 13 is attached to a tip end side of the reagent probe 8a by a method such as a clip mechanism by an lowering operation of the reagent probe 8a, and then the reagent probe 8a is raised to move to an upper side of the lid 4a of the target reagent bottle 4, and the reagent probe 8a is lowered toward the reagent bottle 4 to cut the lid 4a of the reagent bottle 4. Thereafter, the piercing needle 15 is cleaned and dried, and stored in the storage position 13.

As shown in FIGS. 1 and 2, a form is described in which the lid opening mechanism 30 is stored in the storage position 13 and is attached to the reagent probe 8a at the time of opening, but the lid opening mechanism 30 may exist alone as a mechanism in the apparatus, and opens the lid 4a when the reagent bottle 4 is conveyed into the apparatus.

In a lid opening mechanism in the related art, for example, as described in PTL 1, of the reagent probe mounting portion and the piercing needle, the piercing needle has a tip end of a triangular pyramid shape for making a cut by piercing the lid 4a, and an expanding portion of a cylindrical shape for pushing and expanding the cut. Due to the triangular pyramid shape of the tip end, cuts having three sides were made in the lid 4a of the reagent bottle 4, and a triangular hole was opened near a center by the cuts.

When the reagent probe 8a is inserted into the lid 4a provided with such a cut, the reagent probe 8a is inserted so as to push-open the cut of the lid 4a of the reagent bottle 4. After the reagent probe 8a is pulled out, the cut returns from a pushed open state to an original state by elasticity of the lid 4a of the reagent bottle 4.

Therefore, in the opening of the lid 4a using the piercing needle, by reducing an area of the opening portion of the lid 4a of the reagent bottle 4, an inflow of the outside air and the like can be prevented, and the deterioration of the reagent can be prevented.

However, when dispensing the reagent, since the reagent probe 8a is inserted while pushing and opening the cut of the lid 4a of the reagent bottle 4, friction occurs between the reagent probe 8a and the lid 4a of the reagent bottle 4. Therefore, there is a possibility that chemical components contained in the reagent may be denatured due to heat or a shearing force caused by the friction.

In addition, it is expected that the number of measurable times per reagent bottle may increase with development of a reagent micro-dispensing technique in the future. Accordingly, the reagent is affected by frictional heat for a long time, and the deterioration of the reagent may be accelerated. In order to extend a life of the reagent, it is desirable to further reduce the friction between the lid 4a of the reagent bottle 4 and the reagent probe 8a.

Therefore, the inventors of the invention first studied enlarging the cut with a piercing needle having an enlarged triangular pyramid shape as compared with the triangular pyramid shape in the related art in order to improve slidability between the cut and the reagent probe 8a.

However, when a diameter of the piercing needle is increased, the cut begins at a higher position on the lid 4a of the reagent bottle 4 as compared with that in a current state, the opening of the cut becomes uneven, or the cut does not open completely, making it impossible to equally form large cuts having the three sides.

Next, the present inventors studied increasing the number of blades of the piercing needle to increase the number of cuts. This is because it is considered that, by increasing the number of cuts, the lid 4a with the cuts is easily pushed and expanded, and the friction is reduced.

First, a shape of the piercing needle having four blades with the blades being formed into a cross when viewed from an axial direction of the piercing needle was studied. When a cut was made in the lid 4a with such a piercing needle, the cut was made in one of straight lines of the cross, and even if a blade orthogonal to the cut hit the lid 4a, the blade escaped outward from a center of the lid 4a due to the one straight line of the cut. From this result, it was found that it is difficult to make four cuts in the lid 4a with a simple four-blade shape.

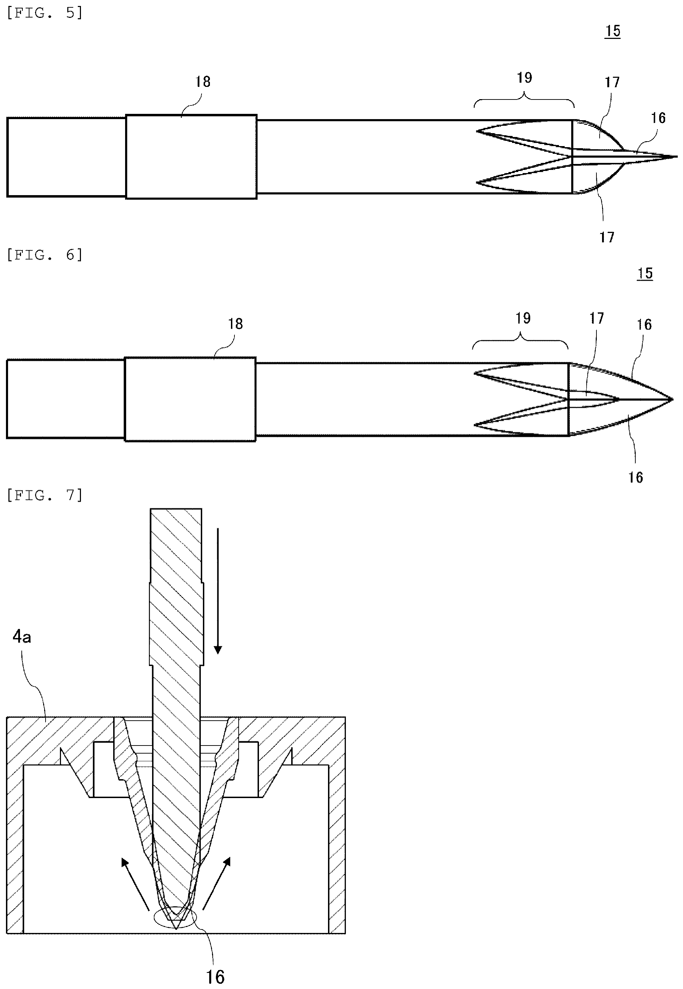

Next, a configuration of the piercing needle of the lid opening mechanism of the present embodiment capable of solving the above-described problem will be described in detail with reference to FIGS. 3 to 6. FIG. 3 is a perspective view of the piercing needle of the lid opening mechanism, FIG. 4 is a right side view of the piercing needle of the lid opening mechanism, FIG. 5 is a top view of the piercing needle of the lid opening mechanism, and FIG. 6 is a front view of the piercing needle of the lid opening mechanism.

The piercing needle 15 shown in FIGS. 3 to 6 is a member for breaking the lid 4a of the reagent bottle 4 to be conveyed to the reagent disk 3 or the reagent bottle 4 conveyed to the reagent disk 3, and is provided at one end thereof with a total of four blade portions including two first step blade portions 16 for breaking the lid 4a from a center portion toward a peripheral portion and two second step blade portions 17 for breaking the lid 4a from the peripheral portion toward the center portion, that is, a sum of a total number of the first step blade portions 16 and a total number of the second step blade portions 17 is an even number.

As shown in FIGS. 3 to 6, the first step blade portion 16 and the second step blade portion 17 are disposed so as not to be parallel to each other. Specifically, blades of the two first step blade portions 16 are disposed on a straight line. Similarly, blades of the two second step blade portions 17 are disposed on a straight line, and the second step blade portions 17 are disposed in a direction obtained by rotating the straight line formed by the first step blade portions 16 by 90° about an axial center of the piercing needle 15. From this, the first step blade portions 16 and the second step blade portions 17 in a circumferential direction of the piercing needle 15 are alternately disposed.

A fixing portion 18 for fixing the piercing needle 15 to the reagent probe mounting portion 14 is provided on the other end side opposite to the tip end side.

Further, it is desirable that among the first step blade portion 16 and the second step blade portion 17, a length from a tip end side of the first step blade portion 16 constituting the tip end of the piercing needle 15, which is a side positioned closest to the tip end side, to the expanding portion 19 positioned on a base side of the first step blade portion 16 and the second step blade portion 17 is shorter than a length by which the piercing needle 15 is inserted into the lid 4a of the reagent bottle 4.

In other words, the piercing needle 15 is a member for breaking the lid 4a of the reagent bottle 4, and includes at least two steps of blade portions (the first step blade portion 16 and the second step blade portion 17) in which tip end positions of the blades are shifted in a longitudinal direction of the piercing needle 15. In other words, the piercing needle 15 includes a plurality of blade portions (the first step blade portion 16 and the second step blade portion 17) having different shapes.

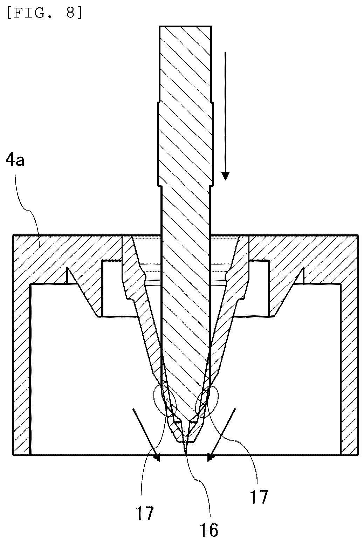

Next, a state where the lid 4a of the reagent bottle 4 is cut by the piercing needle 15 of the lid opening mechanism 30 of the present embodiment will be described with reference to FIGS. 7 and 8. FIG. 7 is a front view showing a state where a cut is made in the lid by the lid opening mechanism, and FIG. 8 is a side view showing a state where a cut is made in the lid by the lid opening mechanism.

As shown in FIG. 7 (from the center portion to the peripheral portion), the first step blade portion 16 makes a cut from the center portion of the lid 4a toward the peripheral portion, whereas as shown in FIG. 8 (from the peripheral portion to the center portion), the second step blade portion 17 makes a cut from the peripheral portion of the lid 4a toward the center portion.

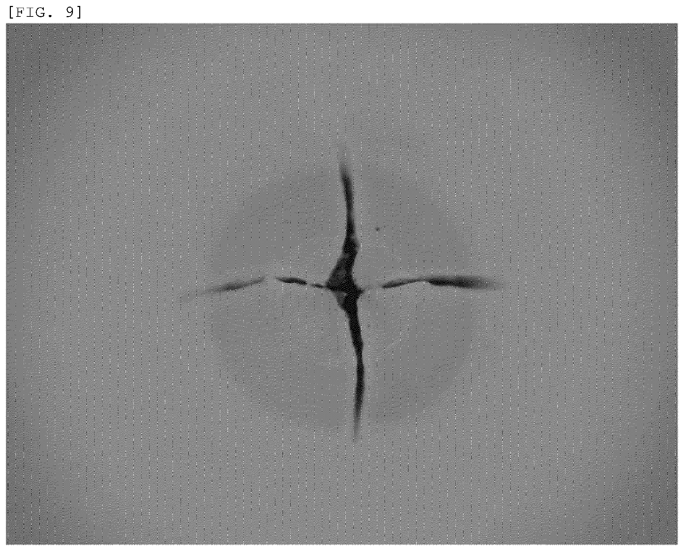

Accordingly, the lid 4a does not escape to the outside from the center of the lid 4a due to the cut made at the center, and cuts having four sides can be made as shown in FIG. 9. FIG. 9 is an image showing a state where the lid is cut by the piercing needle of the lid opening mechanism.

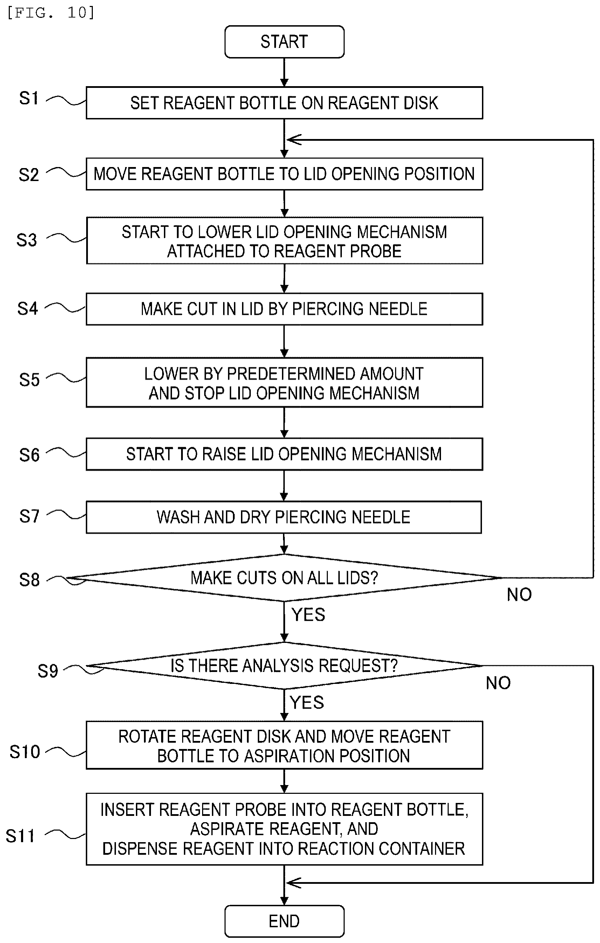

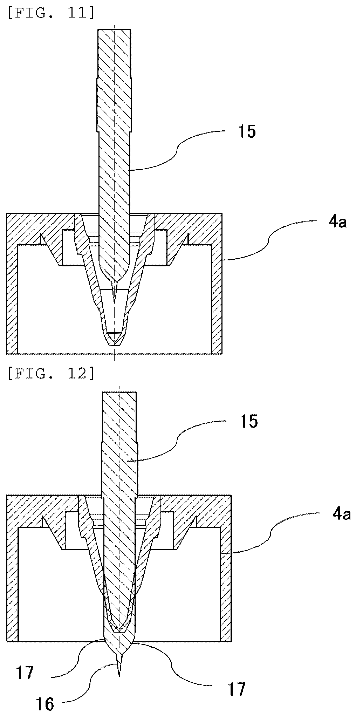

Next, a flow when the cut is made in the lid 4a of the reagent bottle 4 using the piercing needle 15 of the present embodiment shown in FIG. 3 and a state of the lid 4a at the time of opening will be described with reference to FIGS. 10 to 13. FIG. 10 is a flow showing a flow of making a cut in the lid by the lid opening mechanism, FIG. 11 is a view showing a state of step 3 in FIG. 10, FIG. 12 is a view showing a state of step 4 in FIG. 10, and FIG. 13 is a view showing a state of step 11 in FIG. 10. In the example of FIGS. 11 to 13, since a form in which two types of reagents are input into one reagent bottle is shown, the number of lids 4a of the reagent bottle 4 is two.

As shown in FIG. 10, first, the reagent bottle 4 is set on the reagent disk 3 (S1), and when the apparatus recognizes that the reagent bottle 4 is set, the reagent bottle 4 is moved to a lid opening position (insertion position of the piercing needle 15 of the lid opening mechanism 30) (S2).

Thereafter, as shown in FIG. 11, the lid opening mechanism 30 attached to the reagent probe 8a starts to be lowered (S3), and as shown in FIG. 12, the piercing needle 15 makes a cut in the lid 4a (S4). The lid opening mechanism 30 (reagent probe 8a) is lowered as it is without being stopped, and is further lowered by a predetermined amount stored in the apparatus in advance as a parameter and stopped (S5).

Thereafter, the lid opening mechanism (reagent probe 8a) raises (S6) and stops at a predetermined position.

The piercing needle 15 inserted into the lid 4a of the reagent bottle 4 is washed and dried by a cleaning mechanism (not shown) since there is a possibility that the reagent adheres to the tip end of the piercing needle 15 (S7).

Thereafter, it is determined whether cuts are made in all lids (S8), here, since two lids 4a are provided in one reagent bottle 4, the process returns to step 2, and the cuts are made in the other lid 4a in the same flow.

After the cuts are made in both of the two lids 4a of the reagent bottle 4, the process proceeds to step 9 after the determination in step 8, and it is determined whether an analysis request is input (S9). When the analysis request is not input, the process is completed, and the process waits until the next reagent bottle 4 is conveyed or an analysis request is input.

When an analysis request is generated in step 9, the reagent disk 3 is rotated to move the reagent bottle 4 to the reagent aspiration position (S10), and as shown in FIG. 13, the cylindrical reagent probe 8a is inserted from the cuts of the lid 4a of the reagent bottle 4, and the reagent is aspirated into the reagent probe 8a and dispensed into the reaction container 2 (S11).

In the example of FIG. 3 and the like, the blade is curved, but the blade may be linear, and is not particularly limited.

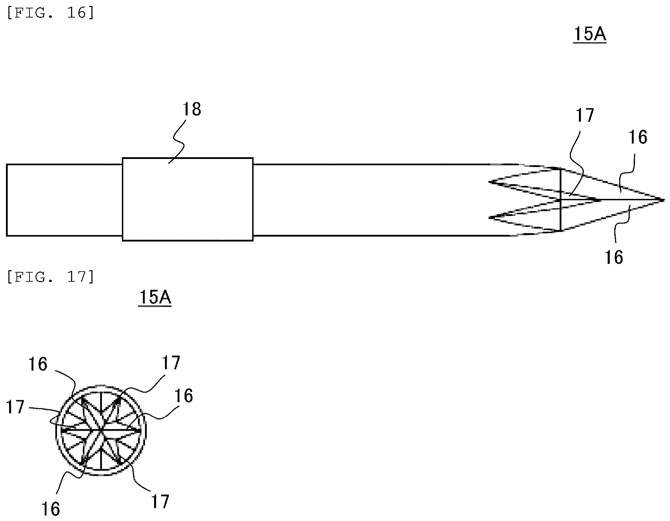

In addition, in FIG. 3 and the like, a case in which the number of first step blade portions 16 and the number of second step blade portions 17 are each two, that is, four in total is shown, but the number of blades may be three or more. FIGS. 14 to 17 show an example in which the number of first step blade portions 16 and the number of second step blade portions 17 are each three. FIG. 14 is a perspective view of another form of the piercing needle of the lid opening mechanism, FIG. 15 is a partially enlarged view of FIG. 14, FIG. 16 is a front view of the other form of the piercing needle of the lid opening mechanism, and FIG. 17 is a right side view of the other form of the piercing needle of the lid opening mechanism.

In the piercing needle 15A shown in FIGS. 14 to 17, a total of six cuts are made including three cuts made by the first step blade portions 16 and three cuts made by the second step blade portions 17. In the piercing needle 15A, the first step blade portions 16 and the second step blade portions 17 in a circumferential direction of the piercing needle 15A are also alternately disposed, and a sum of a total number of the first step blade portions 16 and a total number of the second step blade portions 17 is an even number.

In addition, although a case where the blade portion has two stages of the first step blade portion 16 and the second step blade portion 17 is shown in FIG. 3 and the like and FIG. 14 and the like, the blade portion may be divided into three or more stages, and is not particularly limited.

Next, effects of the present embodiment will be described.

The above-described automatic analyzer 50 of the present embodiment for dispensing a specimen and a reagent into each of a plurality of reaction containers 2 to cause a reaction, and measuring a liquid obtained by the reaction includes the reagent disk 3 configured to accommodate the reagent bottle 4 accommodating the reagent, and the lid opening mechanism 30 including the piercing needle 15 or 15A configured to break the lid 4a of the reagent bottle 4 to be conveyed to the reagent disk 3 or the reagent bottle 4 conveyed to the reagent disk 3, and the piercing needle 15 or 15A includes the first step blade portion 16 configured to break the lid 4a from the center portion of the lid 4a toward the peripheral portion of the lid 4a, and the second step blade portion 17 configured to break the lid 4a from the peripheral portion of the lid to the center portion of the lid.

Accordingly, when the blade is pressed against the lid 4a, a cut having a desired shape can be formed in the lid 4a without escaping from the center of the lid 4a to the outside, and an insertion load at the time of insertion of the reagent probe 8a can be reduced.

In addition, since the first step blade portion 16 and the second step blade portion 17 are disposed so as not to be parallel to each other, the sum of the total number of the first step blade portions 16 and the total number of the second step blade portions 17 is an even number, the plurality of first step blade portions 16 and the plurality of second step blade portions 17 are provided, and the first step blade portions 16 and the second step blade portions 17 in the circumferential direction of the piercing needle 15 or 15A are alternately disposed, it is possible to prevent a load from being unevenly distributed between some of the cuts, and thus it is possible to prevent deterioration of a cut portion and to cope with dispensing of the reagent for a longer period of time.

Further, by making the length from the tip end of the blade portion positioned closest to the tip end side to the base of the blade portion positioned closest to the other tip end side in the first step blade portion 16 and the second step blade portion 17 shorter than the insertion length into the lid 4a, it is possible to obtain effects that the blade portion can be completely inserted up to the expanding portion 19 by the same lowering amount as in the related art, it is not necessary to change the lowering amount or an operation time, and the blade portion can be easily applied to many devices.

### <Others>

The invention is not limited to the embodiments described above, and various modifications and applications are possible. The above-described embodiment is described in detail for easy understanding of the invention, and is not necessarily limited to those having all the configurations described above.

For example, in the above-described embodiment, a form in which the tip end of the first step blade portion 16 is positioned at a position of a central axis of the piercing needle 15 or 15A is described, but a form in which the tip end of the first step blade portion 16 and/or the tip end of the second step blade portion 17 is positioned at a position different from the central axis of the piercing needle 15 or 15A may be employed.

### Reference Signs List

1 reaction disk
2 reaction container
3 reagent disk
4 reagent bottle
4a lid
5 specimen container
6 rack
7 specimen conveyance mechanism
8 reagent dispensing mechanism
8a reagent probe
9 sample dispensing mechanism
9a sample probe
10 cleaning mechanism
11a light source
11b spectrophotometer
12 stirring mechanism
13 storage position
14 reagent probe mounting portion
15, 15A piercing needle
16 first step blade portion
17 second step blade portion
18 fixing portion
19 expanding portion
30 lid opening mechanism
40 controller
41 display unit
50 automatic analyzer

## Claims

1. An automatic analyzer for dispensing a specimen and a reagent into each of a plurality of reaction containers to cause a reaction, and measuring a liquid obtained by the reaction, the automatic analyzer comprising:
a reagent disk configured to accommodate a reagent bottle accommodating the reagent; and
an uncovering mechanism including a piercing needle configured to break a lid of the reagent bottle to be conveyed to the reagent disk or the reagent bottle conveyed to the reagent disk, wherein
the piercing needle includes
a first step blade portion configured to break the lid from a center portion of the lid toward a peripheral portion of the lid, and
a second step blade portion configured to break the lid from the peripheral portion of the lid to the center portion of the lid.

2. The automatic analyzer according to claim 1, wherein
the first step blade portion and the second step blade portion are disposed so as not to be parallel to each other.

3. The automatic analyzer according to claim 1, wherein
a sum of a total number of the first step blade portions and a total number of the second step blade portions is an even number.

4. The automatic analyzer according to claim 1, wherein
a plurality of the first step blade portions and a plurality of the second step blade portions are provided.

5. The automatic analyzer according to claim 4, wherein
the first step blade portions and the second step blade portions in a circumferential direction of the piercing needle are alternately disposed.

6. The automatic analyzer according to claim 1, wherein
in the first step blade portion and the second step blade portion, a length from a tip end of a blade portion positioned closest to a tip end side to a base of a blade portion positioned closest to the other tip end side is shorter than an insertion length to the lid.

7. An uncovering mechanism comprising:
a piercing needle configured to break a lid of a bottle accommodating a liquid, wherein
the piercing needle includes
a first step blade portion configured to break the lid from a center portion of the lid toward a peripheral portion of the lid, and
a second step blade portion configured to break the lid from the peripheral portion of the lid to the center portion of the lid.

8. An uncovering method for opening a lid of a bottle accommodating a liquid, the uncovering method comprising:
opening the lid by lowering a piercing needle from above the lid, the piercing needle including a first step blade portion configured to break the lid from a center portion of the lid toward a peripheral portion of the lid and a second step blade portion configured to break the lid from the peripheral portion of the lid to the center portion of the lid.
